# EUROPEAN PATENT SPECIFICATION

(11) **EP 1 773 076 B1**
(45) Date of publication and mention of the grant of the patent: **21.10.2009**
(21) Application number: 06753054.3
(22) Date of filing: 28.06.2006
(51) Int. Cl.: H04W 4/02

(54) **A METHOD FOR LOCATING MOBILE TERMINAL**
VERFAHREN ZUR LOKALISIERUNG VON MOBILEM ENDGERÄT
PROCEDE PERMETTANT DE LOCALISER UN TERMINAL MOBILE

(30) Priority: 29.06.2005 CN 200510080114
(43) Date of publication of application: 11.04.2007
(73) Proprietor: Huawei Technologies Co., Ltd., Longgang District Shenzhen Guangdong 518129 (CN)
(72) Inventor: GE, Zhengkai Huawei Administration Building, Shenzhen, Guangdong 518129 (CN); FANG, Qiang Huawei Administration Building, Shenzhen, Guangdong 518129 (CN); ZHAO, Hui Huawei Administration Building, Shenzhen, Guangdong 518129 (CN)
(74) Representative: Epping - Hermann - Fischer
(86) International application number: PCT/CN2006/001488
(87) International publication number: WO 2007/000117

(56) References cited:
- WO-A-20/06118401
- JP-A- 2005 114 938
- US-A1- 2002 010 777
- OPEN MOBILE ALLIANCE OMA: "Secure User Plane Location Architecture" OMA-AD-SUPL-V1_0-20050628-D, [Online] 28 June 2005 (2005-06-28), pages 1-80, XP002459195 Retrieved from the Internet: URL:http://member.openmobilealliance.org/f tp/Public_documents/LOC/2005/> [retrieved on 2007-11-20]
- M. LIVINGSTON, NOKIA: "IC: SUPL 2.0 Feature-Enhanced MO Request to locate another SET" INPUT CONTRIBUTION OPEN MOBILE ALLIANCE (OMA), [Online] 16 August 2005 (2005-08-16), pages 1-4, XP002459196 Retrieved from the Internet: URL:member.openmobilealliance.org/ftp/Publ ic_documents/LOC/> [retrieved on 2007-11-20]
- 'SUPL-Standard soll Handy-Ortung voranbringen', [Online] 15 May 2005, XP003005529 Retrieved from the Internet: <URL:http://www.heise.de/newsticker/meldung /59560>

## Description

### Field of the Invention

The present invention relates to the technical field of mobile communication, and particularly to a method, system and mobile terminal for locating a mobile terminal.

### Background of the Invention

Location service(LCS) of a mobile communication network is to obtain location information of a target user,e.g. longitude and latitude information, or the location of a local street, by means of certain technologies, and provide the information to the target user himself for locating oneself, to the communication system itself for charging by region or operation and maintenance functions of its operator, or to the other institutes and individuals which request for the location of the user for value added sevices. Therefore, the location service mainly has the applications of emergency rescue, vehicle navigation and intelligent traffic system, job scheduling and team management, mobile yellow page query, and improving network performance, etc.

As a standard organization of mobile data service field, Open Mobile Alliance(OMA) has established many protocols of application layer in respect to location service, and Secure User-Plane Location(SUPL) protocol is a location protocol established for an SUPL enabled terminal(SET).

The procedure of SUPL is categorized into Network Initiated(NI) procedure and SET Initiated(SI) procedure. The capability of locating itself initiated by a SET is achieved in the SI procedure .

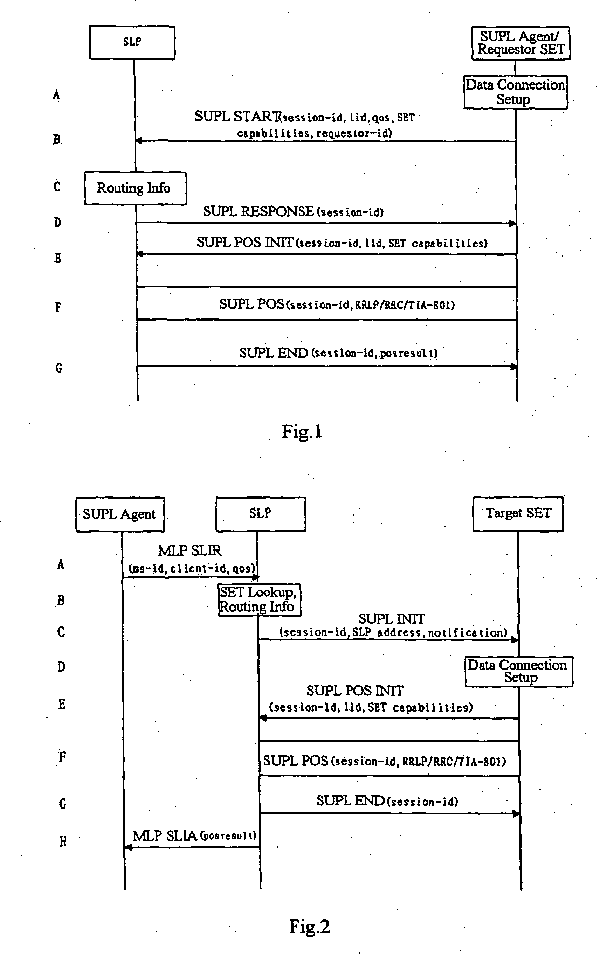

A typical procedure for implementing location by a non-roaming SI is shown in Fig. 1:
A. An SUPL Agent built in the SET receives a location request initiated by an application running on the SET. If the SET has not been connected to a packet data network, the SET will be connected to the packet data network, or the SET will set up a circuit switching data connection;
B. The SUPL Agent on the SET transmits an SUPL START message to start a location session with an SUPL Platform(SLP). The SUPL START message may contain a session identifier session-id, a quality requirement parameter QoS, SET capabilities and a location identifier. The SET capabilities include location method(s) it supports, for example, SET-Assisted A-GPS, SET-Based A-GPS, and corresponding location protocol(s), such as, Radio Resource LCS Protocol (RRLP), Radio Resource Control protocol (RRC), or TIA-801 protocol. According to location method(s) , hereafter simply referred to as posmethod, supported by the SET contained in the SUPL START message, SLP will determine a posmethod to be used. If the posmethod is specified, the SLP will use the supported location protocol(s) (for example, RRLP, RRC, TIA-801) carried in the SUPL START message to perform location. If the SLP has already calculated the location of the SET according to the information in the SUPL START message and met the requested QoS, the location result will be returned through an SUPL END message for ending the session in the subsequent step G;
C. The SLP determines the target terminal is not roaming;
D. The SLP returns an SUPL RESPONSE message to the SET. The SUPL RESPONSE message contains a session-id and a null SLP address which indicates the SET can not set up a new connection again. The SUPL RESPONSE message may also contain a posmethod parameter;
E. After receiving the SUPL RESPONSE message, the SET transmits an SUPL location start message SUPL POS INIT. The SUPL POS INIT message may contain a session-id, SET capabilities and a location identifier. The SET capabilities include supported posmethod(s) (for example, SET-Assisted A-GPS, SET-Based A-GPS ) and associated location protocol(s) (for example, RRLP, RRC, TIA-801).
F. (optional step) The SLP determines a posmethod to be used according to posmethod(s) supported by the SET contained in the SUPL POS INIT message. If the posmethod is requested, the SLP will use the location protocol supported by the SET(for example, RRLP, RRC, TIA-801) obtained from the SUPL POS INIT message. Some location process messages may be interacted continuously between the SET and the SLP. Then, the SLP calculates the location result according to the received location measurement information(SET-Assisted) or the SET calculates the location result according to the assistance data provided by the SLP(SET-Based).
G. After the location calculation, the SLP transmits an SUPL END message to the SET to notify the SET that the location process ends and the location session is finished. The SLP may add the determined location into the SUPL END message according to the location method and the used location protocol. The SET releases all the resources associated with this session. The SLP releases all the resources associated with this session.

In this technical scheme, the SET can only request for its own location information, and can not obtain the location information of other terminals.

Fig.2 is a flowchart of another conventional location method. With reference to Fig..2, another scheme for implementing location is a procedure of triggering SUPL location from the network side in Network Initiated(NI) procedure of OMA SUPL.
A. A SUPL Agent associated with the SLP transmits a Mobile Location Protocol_Standard Location Immediate Request message MLP SLIR to the SLP. The SLP performs authentication on the SUPL Agent and performs privacy check of the target terminal.
B. The SLP determines the target terminal is not roaming.
C. The SLP initializes a location session with an Secure User-Plane Location INIT - SUPL INIT - message which may be carried by WAP PUSH or SMS triggering mode. The SUPL POS INIT message may contain a session-id, the SLP address and the specified location mode. The SUPL INIT message may also contain a desired QoS. If the privacy check result in the step A indicates that verification or notification to the target terminal is needed, a notification parameter Notification will be contained in the SUPL INIT message by the SLP.
D. After receiving the SUPL INIT message, the SET will bind itself to the packet data network - if it has not bound yet - , or set up a circuit switching data connection. ;
E. the SET authenticates the Notification and responds appropriately. The SET sets up a data connection with the SLP according to the SLP address received in the step C, transmits an SUPL POS INIT message to start a location session with the SLP. The SUPL POS INIT message may contain a session-id, SET capabilities and a location identifier lid. The SET capabilities may contain location method(s) supported by the SET,for example, SET-Assisted A-GPS, SET-Based A-GPS, and associated location protocol(s), for example, RRLP, RRC, IS-801. The SET may provide a Network Measurement Report(NMR) associated with used wireless technology,e.g. Time Advance(TA) and a channel power measurement parameter RXLEV in GSM network. The SET may provide its own location or network time information as required under the support of the SET and the H-SLP. The SET may specify a parameter Requested Assistance Data in the SUPL POS INIT message.
F. (optional step) The SLP determines a posmethod to be used according to posmethod(s) supported by the SET contained in the SUPL POS INIT message. If the posmethod is specified, the SLP will use the location protocol supported by the SET, for example, RRLP, RRC, TIA-801, obtained from the SUPL POS INIT message. Several location process messages may be interacted continuously between the SET and the SLP. The SLP calculates the location result according to the received location measurement information- SET-Assisted - or the SET calculates the location result according to the assistance data provided by the SLP - SET-Based.
G. After the location calculation, the SLP transmits an SUPL END message to the SET to indicate that the location process ends and the location session is finished. The SET releases all the resources associated with this session.
H. The SLP transmits a Mobile Location Protocol_Standard Location Immediate Answer message MLP SLIA to the SUPL Agent and returns the location result. The SLP releases all the resources associated with this session.

Though other terminals can be located in this technical scheme, the MLP protocol need also be supported by the SET while the SUPL protocol is supported by the SET, and therefore the cost of terminals is increased.

WO 2006/118401 discloses a method for transmitting location information and a method for transmitting location information in a Secure User Plane Location (SUPL) protocol of a first SUPL Enabled Terminal (SET), a SUPL Location Platform (SLP), and a second SUPL Enabled Terminal (SET).

Open Mobile Alliance, OMA: Secure User Plane Location Architecture Draft version 1.0-28. June 2005, discloses a method for locating a mobile terminal.

### Summary of the Invention

Embodiments of the present invention provide a method for locating mobile terminals, so that multiple protocols need not to be supported when locating other mobile terminals, and therefore the cost of mobile terminals is decreased.

A method for locating a mobile terminal according to an embodiment of the present invention, including:
transmitting, by a requesting terminal, a SUPL protocol based location request message carrying an identifier of a target terminal other than the requesting terminal to an SUPL Platform(SLP);
identifying, by the SLP, the identifier of the target terminal to obtain a location information of the target terminal;
transmitting, by the SLP, a location end message carrying the location information of the target terminal to the requesting terminal.

In the method for locating a mobile terminal according to some embodiments of the present invention, the requesting terminal transmits a location request message carrying an identifier of a target terminal to the SLP, the SLP responds to the request, identifies the identifier of the target terminal, obtains a location information of the target terminal, and transmits the obtained location information of the target terminal to the requesting terminal, so that the SUPL Enabled terminal(SET) can locate itself with SUPL protocol, and also can locate other terminals without supporting the Mobile Location Protocol(MLP), thus the cost of terminals can be decreased.

It is also an object of the present invention to provide a system according to claim 11 and a mobile terminal according to claim 20. Preferred embodiments are defined in the dependent claims.

### Brief Description of the Drawings

Fig.1 is a schematic flowchart of a conventional location method;
Fig.2 is a flowchart of another conventional location method;
Fig.3 is a schematic structure diagram of a system for locating a mobile terminal according to some embodiments of the present invention;
Fig.4 is a schematic flowchart of a method for locating a mobile terminal according to some embodiments of the present invention;
Fig. 5 is a schematic flowchart of a method for locating a mobile terminal according to a first embodiment of the present invention;
Fig.6 is a schematic flowchart of a method for locating a mobile terminal according to a second embodiment of the present invention.

### Detailed Description of the Embodiments

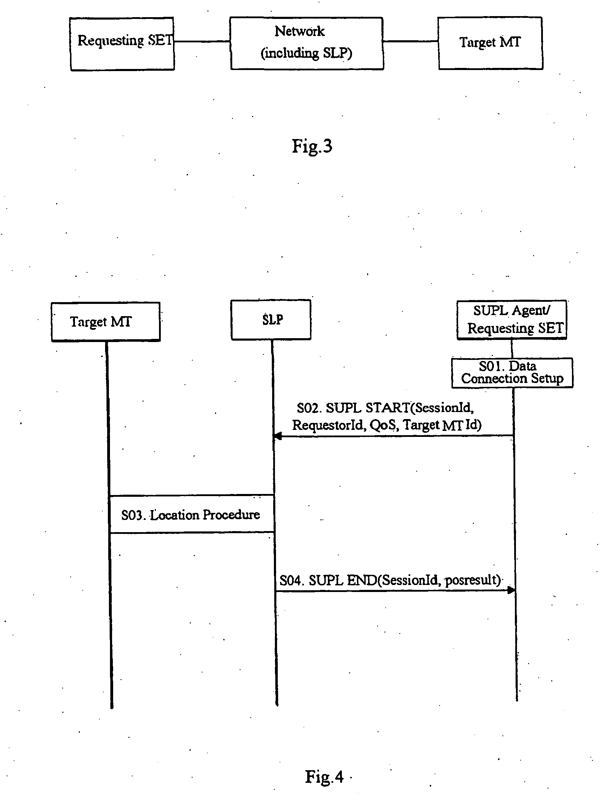

Fig.3 is a structure diagram of a system for locating a mobile terminal according to embodiments of the present invention. The system includes a requesting SET, a network including an SLP and a target terminal (target MT). The method of the present invention is that when the requesting SET initiates an SUPL START message, in which an identifier of a target terminal to be located is carried, the SLP identifies the identifier of the target terminal in the message after receiving the START message, performs a corresponding location process with respect to the capabilities of the target terminal. An SUPL enabled target terminal is called target SET hereinafter. The capabilities of the target SET include location method(s) it supports(for example, SET-Assisted A-GPS, SET-Based A-GPS) and associated location protocol(s)(for example, RRLP, RRC, and IS-801). After locating, a location result is returned to the requesting SET through an SUPL END message.

Fig.4 is a schematic flowchart of a method for locating a mobile terminal according to embodiments of the present invention. As shown in Fig.4, the method according to embodiments of the present invention includes:

S01. The SUPL Agent built in the requesting SET receives a location request initiated by an application running on the requesting SET. If the requesting SET has not been connected to a packet data network, the requesting SET will be connected to the packet data network, or the requesting SET will set up a circuit switching data connection;

S02.The SUPL Agent on the requesting SET transmits an SUPL START message to start a location session with the SLP. The SUPL START message may contain a session-id, a QoS and an identifier of a target terminal. The identifier of the target terminal may be an IMSI, a MSISDN or any other information uniquely identifying a terminal.

S03. The SLP identifies the identifier of the target terminal, performs a corresponding location process according to the capabilities of the target terminal, wherein the location process may be an SUPL location process, a location process defined by 3GPP 03.71 or 3GPP 23.271, or a location process of other types of terminal, and obtains location information of the target terminal;

S04. After a location calculation is completed, the SLP transmits an SUPL END message to the requesting SET to notify that this location session is finished. The SLP adds the location of the target terminal into the SUPL END message. If the location process fails, location failure information is carried in the SUPL END message. The requesting SET releases all the resources associated with this session. The SLP releases all the resources associated with this session.

The First Embodiment Of The Present Invention

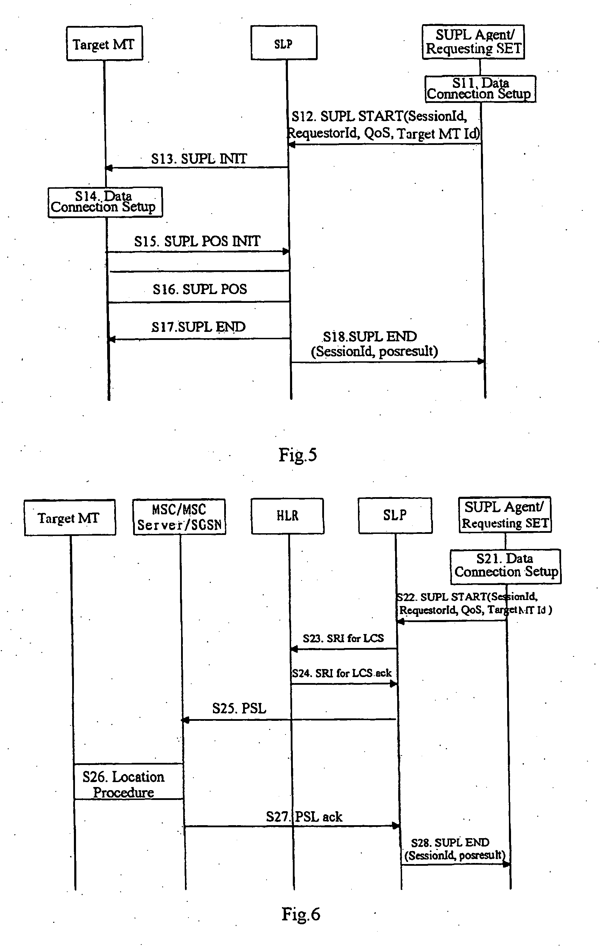

when the requesting SET initiates a request for location information of a target SET to the SLP through an SULP procedure, a corresponding procedure is shown in Fig. 5:

S11. The SUPL Agent built in the requesting SET receives the location request initiated by an application running on the requesting SET. If the requesting SET has not been connected to a packet data network, the requesting SET will be connected to the packet data network, or the requesting SET will set up a circuit switching data connection;

S12.The SUPL Agent on the requesting SET transmits an SUPL START message to start a location session with the SLP. The SUPL START message may contain a session-id, a QoS, a requestorId and an identifier of the target terminal(IMSI, International Mobile Subscriber Identity).

S13. The SLP identifies the identifier of the target terminal, and when the SLP determines that the target terminal supports the SUPL according to the capabilities of the target terminal, transmits an SUPL INIT message to initialize the location session, wherein the SUPL INIT message may be carried by WAP PUSH or SMS triggering mode. The SUPL INIT message may contain a session-id, the SLP address and the specified location mode. The SUPL INIT message may also contain a desired QoS.

In addition, the user privacy protection can be set as required, and accordingly, the SLP need perform a privacy authentication, i.e., check whether the requesting SET has the authority to use the service the requesting SET requests, such as querying the location of the target terminal, according to the ID of the requesting terminal. If the result of the privacy authentication indicates that verification or notification to the target terminal is needed, a parameter Notification will also be contained in the SUPL INIT message by the SLP.

S14. After receiving the SUPL INIT message, the target terminal will bind itself to the packet data network(if it has not bound yet), or set up a circuit switching data connection;

S15. The target terminal authenticates the Notification and responds appropriately. The target terminal sets up a data connection with the SLP according to the SLP address received in the step S13, transmits an SUPL POS INIT message to start a location session with the SLP. The SUPL POS INIT message may contain a session-id, SET capabilities and a location identifier (lid). The SET capabilities contain location method(s) supported by the SET(for example, SET-Assisted A-GPS, SET-Based A-GPS) and associated location protocol(s) (for example, RRLP, RRC, IS-801). The target terminal may provide a NMR associated with the used wireless technology (e.g. TA and RXLEV in GSM network). The target terminal may provide its own location or network time information as required under the support of the target terminal and the SLP. The target terminal may specify assistance data, i.e. a parameter Requested Assistance Data , in the SUPL POS INIT message;

S16. (optional step) The SLP determines a posmethod to be used according to the posmethod(s) supported by the target terminal contained in the SUPL POS INIT message. If the posmethod is specified, the SLP will use the location protocol supported by the target terminal (for example, RRLP, RRC, TIA-801) obtained from the SUPL POS INIT message. Several location process messages may be interacted continuously between the target terminal and the SLP. The SLP calculates the location result according to the received location measurement information (SET-Assisted) or the target terminal calculates the location result according to the assistance data provided by the SLP (SET-Based);

S17. After the location calculation, the SLP transmits an SUPL END message to the target terminal to indicate that the location process ends and the location session with the target terminal is finished. The target terminal releases all the resources associated with this session;

S18. The SLP transmits an SUPL END message to the requesting SET to notify that the location session is finished. The SLP may add the location of the target terminal into the SUPL END message. The requesting SET releases all the resources associated with this session. The SLP releases all the resources associated with this session.

The Second Embodiment Of The Present Invention

In the embodiment, the requesting SET initiates an SUPL session, and requests the location of a target terminal from the SLP. A corresponding procedure according to the embodiment is shown in Fig. 6:

S21. The SUPL Agent built in the requesting SET receives the location request initiated by an application running on the requesting SET. If the requesting SET has not been connected to a packet data network, the requesting SET will be connected to the packet data network, or the requesting SET will set up a circuit switching data connection;

S22.The SUPL Agent on the requesting SET transmits an SUPL START message to start a location session with the SLP. The SUPL START message may contain a session-id, a QoS, a requestorId and an identifier of the target terminal (MSISDN);

S23. The SLP identifies the identifier of the target terminal, and when the SLP determines that the target terminal does not support the SUPL and the target terminal is a common UE terminal (also called MS in 2G network) according to the capabilities of the target terminal, starts a MT-LR location procedure defined by 3GPP. The SLP transmits an SRI for LCS (Send Routing Info for LCS) message to a HLR of the target terminal to request for an address of a VMSC/MSC Server or an address of an SGSN(Serving GPRS Support Node) of the location of the target terminal;

S24. The HLR returns an SRI for LCS response message to the SLP, in which the address of the VMSC/MSC Server or the address of the SGSN of the location of the target terminal is carried;

S25. The SLP initiates a Provide Subscriber

Location (PSL) message to the VMSC/MSC Server or the SGSN according to the obtained address;

S26. The VMSC/MSC Server or the SGSN interacts with the target terminal and obtains a location information of the target terminal;

S27. The VMSC/MSC Server or the SGSN returns the location information of the target terminal to the SLP through a PSL response message.

S28. The SLP transmits an SUPL END message to the requesting SET to notify that the location session is finished. The SLP may add the location of the target terminal into the SUPL END message. The requesting SET releases all the resources associated with this session. The SLP releases all the resources associated with this session.

Obviously, various variations and modifications can be made by those skilled in the art without departing from the scope of the present invention. Thus, it is intended to include these variations and modifications if these variations and modifications fall into the scope of the following claims of the present invention and its equivalents.

## Claims

1. A method for locating a mobile terminal, comprising:
transmitting, by a requesting terminal, a Secure User-Plane Location protocol based location request message carrying an identifier of a target terminal other than the requesting terminal to a Secure User-Plane Location Platform, SLP;
identifying, by the Secure User-Plane Location Platform, SLP, the identifier of the target terminal to obtain a location information of the target terminal;
transmitting, by the Secure User-Plane Location Platform, SLP, a location end message carrying the location information of the target terminal to the requesting terminal.

2. The method according to claim 1, further comprising:
setting up data connection between the requesting terminal and the Secure User-Plane Location Platform, SLP, and setting up data connection between the target terminal and the Secure User-Plane Location Platform, SLP.

3. The method according to claim 1, further comprising:
reporting location capabilities information of the target terminal to the Secure User-Plane Location Platform, SLP;
performing, by the Secure User-Plane Location Platform, SLP, a corresponding location process according to the location capabilities information of the target terminal, wherein the location capabilities information supported by the target terminal comprise location methods supported by the target terminal and associated location protocols.

4. The method according to claim 3, wherein
the associated location protocol comprises one of Radio Resource LCS Protocol, RRLP, Radio Resource Control protocol, RRC, and TIA-801 location protocol IS-801.

5. The method according to claim 1, further comprising:
releasing all resources associated with location session after the Secure User-Plane Location Platform, SLP transmitting the location end message.

6. The method according to claim 1, wherein the identifier of the target terminal is information identifying the identity of the target terminal, the information comprising an IMSI identifier or an MSISDN identifier.

7. The method according to claim 1, wherein if the process of obtaining the location information of the target terminal fails, the Secure User-Plane Location Platform, SLP transmits the location end message carrying failure information to the requesting terminal.

8. The method according to claim 1, wherein the location end message carrying the location information of the target terminal is an Secure User-Plane Location END message.

9. The method according to claim 1 or 3, wherein the Secure User-Plane Location Platform, SLP identifies the identifier of the target terminal, and when the Secure User-Plane Location Platform, SLP determines that the target terminal supports the Secure User-Plane location process according to the location capabilities of the target terminal, transmits an Secure User-Plane Location INIT message to initialize a location session and start an Secure User-Plane location process.

10. The method according to claim 1 or 3, wherein the Secure User-Plane Location Platform, SLP identifies the identifier of the target terminal, and when the Secure User-Plane Location Platform, SLP determines that the target terminal does not support the Secure User-Plane location process according to the capabilities of the target terminal, transmits a message to request for a VMSC/MSC address or an SGSN address of the location of the target terminal to start an MT-LR location process.

11. A system for locating a mobile terminal, comprising:
a requesting terminal adapted to transmit a Secure User-Plane Location protocol based location request message carrying an identifier of a target terminal other than the requesting terminal to an Secure User-Plane Location Platform, SLP, and receive a location end message carrying a location information of the target terminal which is transmitted by the Secure User-Plane Location Platform, SLP; and
the Secure User-Plane Location Platform, SLP adapted to identify the identifier of the target terminal to obtain the location information of the target terminal, and transmit the location end message; and
the target terminal adapted to interact with the Secure User-Plane Location Platform, SLP to obtain the location information of the target terminal.

12. The system according to claim 11, wherein the requesting terminal sets up data connection with the Secure User-Plane Location Platform, SLP, and the target terminal sets up data connection with the Secure User-Plane Location Platform, SLP.

13. The system according to claim 12, wherein:
the target terminal reports location capabilities information of the target terminal to the Secure User-Plane Location Platform, SLP;
the Secure User-Plane Location Platform, SLP performs a corresponding location process according to the location capabilities information of the target terminal, the location capabilities information supported by the target terminal comprising location methods supported by the target terminal and associated location protocols.

14. The system according to claim 13, wherein the associated location protocol comprises one of Radio Resource LCS Protocol, RRLP, Radio Resource Control protocol, RRC, and TIA-801 location protocol IS-801.

15. The system according to claim 11, wherein the identifier of the target terminal is information identifying the identity of the target terminal, the information comprising an IMSI identifier or an MSISDN identifier.

16. The system according to claim 11, wherein if the Secure User-Plane Location Platform, SLP fails to obtain the location information of the target terminal, the Secure User-Plane Location Platform, SLP transmits the location end message carrying failure information to the requesting terminal.

17. The system according to claim 11, wherein the location end message carrying the location information of the target terminal is an Secure User-Plane Location END, SUPL_END message.

18. The system according to claim 11 or 13, wherein the Secure User-Plane Location Platform, SLP identifies the identifier of the target terminal, and when the Secure User-Plane Location Platform, SLP determines that the target terminal supports the Secure User-Plane location process according to the location capabilities of the target terminal, the Secure User-Plane Location Platform, SLP transmits an Secure User-Plane Location INIT, SUPL INIT message to initialize a location session and start an Secure User-Plane location process.

19. The system according to claim 11 or 13, wherein the Secure User-Plane Location Platform, SLP identifies the identifier of the target terminal, and when the Secure User-Plane Location Platform, SLP determines that the target terminal does not support the Secure User-Plane Location location process according to the capabilities of the target terminal, the Secure User-Plane Location Platform, SLP transmits a message to request for a VMSC/MSC address or an SGSN address of the location of the target terminal to start an MT-LR location process.

20. A mobile terminal, comprising an Secure User-Plane Location agent adapted to transmit a Secure User-Plane Location protocol based location request message carrying an identifier of a target terminal other than the requesting terminal to an Secure User-Plane Location Platform, SLP, and receive a location end message carrying a location information of the target terminal which is transmitted by the Secure User-Plane Location Platform, SLP.

## Patentansprüche

1. Verfahren zur Positionsbestimmung eines mobilen Endgerätes, umfassend:
Durch ein anforderndes Endgerät Senden einer auf dem Secure User-Plane Location Protokoll basierenden Positionsbestimmungs-Anforderungs-Nachricht, die eine Kennung eines Ziel-Endgerätes, das nicht das anfordernde Endgerät ist, zu einer Secure User-Plane Location Plattform, SLP, überträgt;
durch die Secure User-Plane Location Plattform, SLP, Erkennen der Kennung des Ziel-Endgerätes, um eine Positionsinformation des Ziel-Endgerätes zu erhalten;
durch die Secure User-Plane Location Plattform, SLP, Senden einer Positionsbestimmungs-Ende-Nachricht, die die Positionsinformation des Ziel-Endgerätes zum anfordernden Endgerät überträgt.

2. Verfahren nach Anspruch 1, ferner umfassend:
Aufbau einer Datenverbindung zwischen dem anfordernden Endgerät und der Secure User-Plane Location Plattform, SLP, und Aufbau einer Datenverbindung zwischen dem Ziel-Endgerät und der Secure User-Plane Location Plattform, SLP.

3. Verfahren nach Anspruch 1, ferner umfassend:
Melden von Informationen über die Positionsbestimmungs-Fähigkeiten des Ziel-Endgerätes an die Secure User-Plane Location Plattform, SLP;
durch die Secure User-Plane Location Plattform, SLP, Ausführen eines entsprechenden Positionsbestimmungs-Prozesses entsprechend der Informationen über die Positionsbestimmungs-Fähigkeiten des Ziel-Endgerätes, wobei die Informationen über die Positionsbestimmungs-Fähigkeiten, die vom Ziel-Endgerät unterstützt werden, Positionsbestimmungs-Verfahren und zugehörige Positionsbestimmungs-Protokolle umfassen.

4. Verfahren nach Anspruch 3, wobei:
das zugehörige Positionsbestimmungs-Protokoll eines aus dem Radio Resource LCS Protocol, RRLP, dem Radio Resource Control Protocol, RRC, und dem TIA-801 Location Protocol IS-801 umfasst.

5. Verfahren nach Anspruch 1, ferner umfassend:
Freigabe aller Ressourcen, die zur Positionsbestimmungs-Sitzung gehören, nachdem die Secure User-Plane Location Plattform, SLP, die Positionsbestimmungs-Ende-Nachricht gesendet hat.

6. Verfahren nach Anspruch 1, wobei es sich bei der Kennung des Ziel-Endgerätes um Informationen handelt, die die Identität des Ziel-Endgerätes kennzeichnen, wobei die Informationen eine IMSI-Kennung oder eine MSISDN-Kennung umfassen.

7. Verfahren nach Anspruch 1, wobei wenn der Prozess des Erhaltens der Positions-Information des Ziel-Endgerätes fehlschlägt, die Secure User-Plane Location Plattform, SLP, die Positionsbestimmungs-Ende-Nachricht sendet, die Fehler-Informationen an das anfordernde Endgerät überträgt.

8. Verfahren nach Anspruch 1, wobei die Positionsbestimmungs-Ende-Nachricht, die die Positions-Information des Ziel-Endgerätes überträgt, eine Secure User-Plane Location END Nachricht ist.

9. Verfahren nach Anspruch 1 oder 3, wobei die Secure User-Plane Location Plattform, SLP, die Kennung des Ziel-Endgerätes erkennt, und wenn die Secure User-Plane Location Plattform, SLP, feststellt, dass das Ziel-Endgerät den Secure User-Plane Positionsbestimmungs-Prozess entsprechend der Positionsbestimmungs-Fähigkeiten des Ziel-Endgerätes unterstützt, sie eine Secure User-Plane Location INIT Nachricht sendet, um eine Positionsbestimmungs-Sitzung zu initialisieren und einen Secure User-Plane Positionsbestimmungs-Prozess zu starten.

10. Verfahren nach Anspruch 1 oder 3, wobei die Secure User-Plane Location Plattform, SLP, die Kennung des Ziel-Endgerätes erkennt, und wenn die Secure User-Plane Location Plattform, SLP, feststellt, dass das Ziel-Endgerät den Secure User-Plane Positionsbestimmungs-Prozess entsprechend der Positionsbestimmungs-Fähigkeiten des Ziel-Endgerätes nicht unterstützt, sie eine Nachricht sendet, um eine VMSC/MSC-Adresse oder eine SGSN-Adresse der Position des Ziel-Endgerätes anzufordern, um einen MT-LR Positionsbestimmungs-Prozess zu starten.

11. System zur Positionsbestimmung eines mobilen Endgerätes, umfassend:
Ein anforderndes Endgerät, das angepasst ist, eine auf dem Secure User-Plane Location Protokoll basierende Positionsbestimmungs-Anforderungs-Nachricht zu senden, die eine Kennung eines Ziel-Endgerätes, das nicht das anfordernde Endgerät ist, zu einer Secure User-Plane Location Plattform, SLP, überträgt, und eine Positionsbestimmungs-Ende-Nachricht zu empfangen, die eine Positions-Information des Ziel-Endgerätes überträgt, die von der Secure User-Plane Location Plattform, SLP, gesendet wird; und
die Secure User-Plane Location Plattform, SLP, die angepasst ist, die Kennung des Ziel-Endgerätes zu erkennen, um die Positionsinformation des Ziel-Endgerätes zu erhalten und die Positionsbestimmungs-Ende-Nachricht zu senden; und
das Ziel-Endgerät, das angepasst ist, mit der Secure User-Plane Location Plattform, SLP, zusammenzuarbeiten, um Positionsinformation des Ziel-Endgerätes zu erhalten.

12. System nach Anspruch 11, wobei das anfordernde Endgerät eine Datenverbindung mit der Secure User-Plane Location Plattform, SLP, aufbaut, und das Ziel-Endgerät eine Datenverbindung mit der Secure User-Plane Location Plattform, SLP, aufbaut.

13. System nach Anspruch 12, wobei:
Das Ziel-Endgerät Informationen über die Positionsbestimmungs-Fähigkeiten des Ziel-Endgerätes an die Secure User-Plane Location Plattform, SLP, meldet;
die Secure User-Plane Location Plattform, SLP, einen entsprechenden Positionsbestimmungs-Prozess entsprechend der Informationen über die Positionsbestimmungs-Fähigkeiten des Ziel-Endgerätes ausführt, wobei die Informationen über die Positionsbestimmungs-Fähigkeiten, die vom Ziel-Endgerät unterstützt werden, Positionsbestimmungs-Verfahren, die vom Ziel-Endgerät unterstützt werden und zugehörige Positionsbestimmungs-Protokolle umfassen.

14. System nach Anspruch 13, wobei:
das zugehörige Positionsbestimmungs-Protokoll eines aus dem Radio Resource LCS Protocol, RRLP, dem Radio Resource Control Protocol, RRC, und dem TIA-801 Location Protocol IS-801 umfasst.

15. System nach Anspruch 11, wobei die es sich bei der Kennung des Ziel-Endgerätes um Informationen handelt, die die Identität des Ziel-Endgerätes kennzeichnen, wobei die Informationen eine IMSI-Kennung oder eine MSISDN-Kennung umfassen.

16. System nach Anspruch 11, wobei wenn die Secure User-Plane Location Plattform, SLP, die Positions-Information des Ziel-Endgerätes nicht erhält, die Secure User-Plane Location Plattform, SLP, die Positionsbestimmungs-Ende-Nachricht sendet, die Fehler-Informationen an das anfordernde Endgerät überträgt.

17. System nach Anspruch 11, wobei die Positionsbestimmungs-Ende-Nachricht, die die Positions-Information des Ziel-Endgerätes überträgt, eine Secure User-Plane Location END, SUPL_END Nachricht ist.

18. System nach Anspruch 11 oder 13, wobei die Secure User-Plane Location Plattform, SLP, die Kennung des Ziel-Endgerätes erkennt, und wenn die Secure User-Plane Location Plattform, SLP, feststellt, dass das Ziel-Endgerät den Secure User-Plane Positionsbestimmungs-Prozess entsprechend der Positionsbestimmungs-Fähigkeiten des Ziel-Endgerätes unterstützt, die Secure User-Plane Location Plattform, SLP, eine Secure User-Plane Location INIT, SUPL_INIT Nachricht sendet, um eine Positionsbestimmungs-Sitzung zu initialisieren und einen Secure User-Plane Positionsbestimmungs-Prozess zu starten.

19. System nach Anspruch 11 oder 13, wobei die Secure User-Plane Location Plattform, SLP, die Kennung des Ziel-Endgerätes erkennt, und wenn die Secure User-Plane Location Plattform, SLP, feststellt, dass das Ziel-Endgerät den Secure User-Plane Positionsbestimmungs-Prozess entsprechend der Positionsbestimmungs-Fähigkeiten des Ziel-Endgerätes nicht unterstützt, die Secure User-Plane Location Plattform, SLP, eine Nachricht sendet, um eine VMSC/MSC-Adresse oder eine SGSN-Adresse der Position des Ziel-Endgerätes anzufordern, um einen MT-LR Positionsbestimmungs-Prozess zu starten.

20. Mobiles Endgerät, das einen Secure User-Plane Location Agent enthält, der angepasst ist, eine auf dem Secure User-Plane Location Protokoll basierende Positionsbestimmungs-Anforderungs-Nachricht zu senden, die eine Kennung eines Ziel-Endgerätes, das nicht das anfordernde Endgerät ist, zu einer Secure User-Plane Location Plattform, SLP, überträgt, und eine Positionsbestimmungs-Ende-Nachricht zu empfangen, die eine Positions-Information des Ziel-Endgerätes überträgt, die von der Secure User-Plane Location Plattform, SLP, gesendet wird.

## Revendications

1. Méthode pour la localisation d'un terminal mobile, comprenant :
la transmission, par un terminal demandeur, d'un message de demande de localisation basé sur le protocole Localisation de plan d'utilisateur sécurisé (Secure User-Plane Location) et transportant un identificateur d'un terminal cible autre que le terminal demandeur, à une Plate-forme de localisation de plan d'utilisateur sécurisée (Secure User-Plane Location Platform) SLP ;
l'identification, par la Plate-forme de localisation de plan d'utilisateur sécurisée SLP, de l'identificateur du terminal-cible pour obtenir des informations de localisation du terminal-cible ;
la transmission, par la Plate-forme de localisation de plan d'utilisateur sécurité SLP, d'un message de fin de localisation transportant les informations de localisation du terminal-cible au terminal demandeur.

2. Méthode selon la revendication 1, comprenant en outre :
l'établissement d'une connexion de données entre le terminal demandeur et la Plate-forme de localisation de plan d'utilisateur sécurisé SLP et l'établissement d'une connexion de données entre le terminal-cible et la Plate-forme de localisation de plan d'utilisateur sécurisé SLP.

3. Méthode selon la revendication 1, comprenant en outre :
la transmission d'un rapport sur les informations de capacités de localisation du terminal-cible à la Plate-forme de localisation de plan d'utilisateur sécurisée SLP ;
l'exécution, par la Plate-forme de localisation de plan d'utilisateur sécurisée SLP, d'un processus de localisation correspondant selon les informations de capacités de localisation du terminal-cible, sachant que les informations de capacités de localisation prises en charge par le terminal-cible comprennent des méthodes de localisation prises en charge par le terminal-cible et les protocoles de localisation associés.

4. Méthode selon la revendication 3, dans laquelle :
le protocole de localisation associé est l'un des protocoles suivants : Radio Resource LCS Protocol (RRLP), Radio Resource Control protocol (RRC) et TIA-801 location protocol IS-801.

5. Méthode selon la revendication 1, comprenant en outre :
la libération de toutes les ressources associées à la session de localisation après que la Plate-forme de localisation de plan d'utilisateur sécurisée SLP ait transmis le message de fin de localisation.

6. Méthode selon la revendication 1, dans laquelle l'identificateur du terminal-cible est une information identifiant l'identité du terminal-cible, ladite information contenant un identificateur IMSI ou un identificateur MSISDN.

7. Méthode selon la revendication 1, dans laquelle, si le processus d'obtention des informations de localisation du terminal-cible échoue, la Plate-forme de localisation de plan d'utilisateur sécurisée transmet le message de fin de localisation transportant les informations d'échec au terminal demandeur.

8. Méthode selon la revendication 1, dans laquelle le message de fin de localisation transportant les informations de localisation du terminal-cible est un message de FIN de localisation de plan d'utilisateur sécurisée.

9. Méthode selon la revendication 1 ou 3, dans laquelle la Plate-forme de localisation de plan d'utilisateur sécurisée SLP identifie l'identificateur du terminal-cible et, lorsque la Plate-forme de localisation de plan d'utilisateur sécurisée SLP détermine que le terminal-cible prend en charge le processus de localisation de plan d'utilisateur sécurisée conformément aux capacités de localisation du terminal-cible, elle transmet un message INIT de localisation de plan d'utilisateur sécurisée pour initialiser une session de localisation et démarrer un processus de Localisation de plan d'utilisateur sécurisée.

10. Méthode selon la revendication 1 ou 3, dans laquelle la Plate-forme de localisation de plan d'utilisateur sécurisée SLP identifie l'identificateur du terminal-cible et, lorsque la Plate-forme de localisation de plan d'utilisateur sécurisée SLP détermine que le terminal-cible ne prend pas en charge le processus de localisation de plan d'utilisateur sécurisée conformément aux capacités de localisation du terminal-cible, elle transmet un message pour demander une adresse VMSC/MSC ou une adresse SGSN de la localisation du terminal-cible pour démarrer un processus de localisation MT-LR.

11. Système pour la localisation d'un terminal mobile, comprenant :
un terminal demandeur adapté pour transmettre un message de demande de localisation basé sur le protocole Localisation de plan d'utilisateur sécurisé (Secure User-Plane Location) et transportant un identificateur d'un terminal-cible autre que le terminal demandeur, à une Plate-forme de localisation de plan d'utilisateur sécurisée (Secure User-Plane Location Platform) SLP, et pour recevoir un message de fin de localisation transportant des informations de localisation du terminal-cible, lesquelles sont transmises par la Plate-forme de localisation de plan d'utilisateur sécurisée SLP, et
la Plate-forme de localisation de plan d'utilisateur sécurisée SLP, adaptée pour identifier l'identificateur du terminal-cible pour obtenir les informations de localisation du terminal-cible et transmettre le message de fin de localisation, et
le terminal-cible, adapté pour interagir avec la Plate-forme de localisation de plan d'utilisateur sécurisée SLP pour obtenir les informations de localisation du terminal-cible.

12. Système selon la revendication 11, dans lequel le terminal demandeur établit une connexion de données avec la Plate-forme de localisation de plan d'utilisateur sécurisée SLP et le terminal-cible établit une connexion de données avec la Plate-forme de localisation de plan d'utilisateur sécurisée SLP.

13. Système selon la revendication 12, dans lequel :
le terminal-cible transmet un rapport sur les informations de capacités de localisation du terminal-cible à la Plate-forme de localisation de plan d'utilisateur sécurisée SLP ;
la Plate-forme de localisation de plan d'utilisateur sécurisée SLP exécute un processus de localisation correspondant selon les informations de capacités de localisation du terminal-cible, les informations de capacités de localisation prises en charge par le terminal-cible comprenant des méthodes de localisation prises en charge par le terminal-cible et les protocoles de localisation associés.

14. Système selon la revendication 13, dans lequel :
le protocole de localisation associé est l'un des protocoles suivants : Radio Resource LCS Protocol (RRLP), Radio Resource Control protocol (RRC) et TIA-801 location protocol IS-801.

15. Système selon la revendication 11, dans lequel l'identificateur du terminal-cible est une information identifiant l'identité du terminal-cible, ladite information contenant un identificateur IMSI ou un identificateur MSISDN.

16. Système selon la revendication 11, dans lequel, si la Plate-forme de localisation de plan d'utilisateur sécurisée SLP échoue à l'obtention des informations de localisation du terminal-cible, la Plate-forme de localisation de plan d'utilisateur sécurisée SLP transmet le message de fin de localisation transportant les informations d'échec au terminal demandeur.

17. Système selon la revendication 11, dans lequel le message de fin de localisation transportant les informations de localisation du terminal-cible est un message FIN, SUPL_FIN de localisation de plan d'utilisateur sécurisée.

18. Système selon la revendication 11 ou 13, dans lequel la Plate-forme de localisation de plan d'utilisateur sécurisée SLP identifie l'identificateur du terminal-cible et, lorsque la Plate-forme de localisation de plan d'utilisateur sécurisée SLP détermine que le terminal-cible prend en charge le processus de localisation de plan d'utilisateur sécurisée conformément aux capacités de localisation du terminal-cible, la Plate-forme de localisation de plan d'utilisateur sécurisée SLP transmet un message INIT, SUPL_INIT de localisation de plan d'utilisateur sécurisée pour initialiser une session de localisation et démarrer un processus de Localisation de plan d'utilisateur sécurisée.

19. Système selon la revendication 11 ou 13, dans lequel la Plate-forme de localisation de plan d'utilisateur sécurisée SLP identifie l'identificateur du terminal-cible et, lorsque la Plate-forme de localisation de plan d'utilisateur sécurisée SLP détermine que le terminal-cible ne prend pas en charge le processus de localisation selon le protocole Localisation de plan d'utilisateur sécurisée conformément aux capacités de localisation du terminal-cible, la Plate-forme de localisation de plan d'utilisateur sécurisée SLP transmet un message pour demander une adresse VMSC/MSC ou une adresse SGSN de la localisation du terminal-cible pour démarrer un processus de localisation MT-LR.

20. Terminal mobile, comportant un agent de Localisation de plan d'utilisateur sécurisée et adapté pour transmettre un message de demande de localisation basé sur le protocole Localisation de plan d'utilisateur sécurisé (Secure User-Plane Location) et transportant un identificateur d'un terminal-cible autre que le terminal demandeur à une Plate-forme de localisation de plan d'utilisateur sécurisée SLP, et pour recevoir un message de fin de location transportant des informations de localisation du terminal-cible, lesquelles sont transmises par la Plate-forme de localisation de plan d'utilisateur sécurisée SLP.
